# EUROPEAN PATENT APPLICATION

(11) **EP 1 614 912 A2**
(43) Date of publication of application: **11.01.2006**
(21) Application number: 05105713.1
(22) Date of filing: 27.06.2005
(51) Int. Cl.: F16C 11/06

(54) **Ball joint and associated method of manufacture**

(30) Priority: 07.07.2004 IT TO20040466
(71) Applicant: OCAP S.p.A., 10087 Valperga (Torino) (IT)
(72) Inventor: Cena, Fulvio, 10080 Luisglie' (Torino) (IT)
(74) Representative: Serra, Francesco

(57) **Abstract**

An axial joint is described, comprising a metal socket (2) with aperture (26), an internal space (4), a ball pin (18) formed by a joint ball (20) and a shank (22), the joint ball (20) being enclosed for the greater part inside the socket (2) and the shank (22) which projects from the socket (2) through an aperture (26); after assembly of the axial joint, the diameter of the joint ball is greater than the diameter of the aperture (26) of the socket (2); a shell (12) composed of a first half-shell (14) and a second half-shell (16) is arranged between the socket (2) and the joint ball (20). A method for producing the above-mentioned joint is also described.

## Description

The present invention relates to an axial joint and to the associated method of manufacture.

The purpose of the present invention is to produce an axial joint, to be used mainly in the manufacture of a chassis and especially to be used in the manufacture of drive and steering components for a vehicle.

Another purpose of the present invention is to produce a method for the production of the axial joint as stated previously.

The present invention achieves the above-mentioned purposes by means of an axial joint and the associated method of producing it, having the characteristics claimed specifically in the claims which follow.

The invention will now be described, purely by way of nonlimiting example, with reference to the appended drawings in which:
- figure 1 shows in partial cross-section an axial joint according to the invention in a first assembly step;
- figure 2 shows a cross-section of a detail from figure 1, and
- figure 3 shows the cross-section of an axial joint according to the invention in its final form.

With reference to the drawings, in which identical or equivalent parts are assigned the same reference numbers, the number 1 indicates the axial joint according to the invention in its entirety.

The axial joint 1 comprises a metal casing 2 which comprises an internal empty space 4, a cylindrical section 6, a tapering section 8 with an angle close to 45° and a flat section 10.

A shell 12 comprising a first part or first half-shell 14 and a second part or second half-shell 16 is inserted inside the empty space 4.

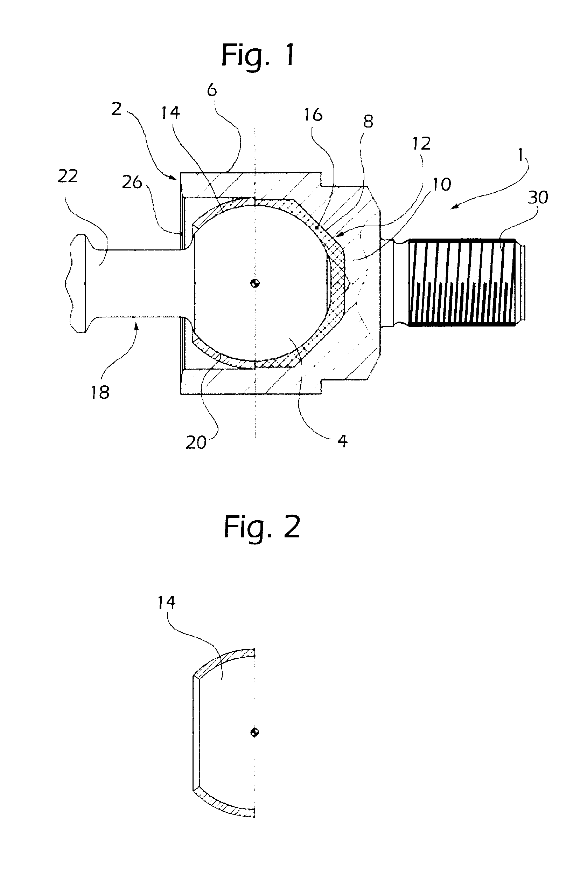

The first half-shell 14 shown in figure 1 is produced from self-lubricating multi-layer material and has a substantially hemispherical shape.

The second half-shell 16 is constructed entirely of plastics material.

A ball pin 18 is inserted inside the shell 12, so that a joint ball 20 is in contact with the shell 12 for a large part of its surface. The ball pin 18 comprises a shank 22 connected to the joint ball 20.

In the course of the method of manufacture, the substantially cylindrical part 6 of the metal casing 2 is cold worked against the outer surface of the first half-shell 14.

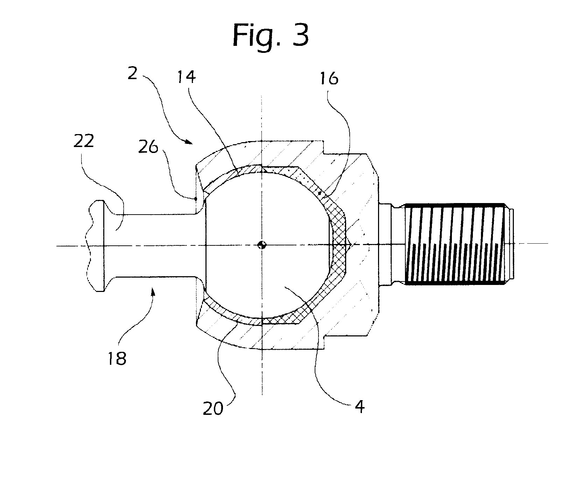

With reference to figure 3, the axial joint 1 is shown in its final form, after the cold forming of the walls 6 of the metal casing 2.

As may be noted, the broad aperture 26 originally present on the socket 2, through which the joint ball 20 of the ball pin 18 is inserted inside the metal casing 2, is reduced by the step of cold forming to which the socket 2 is subjected, so that finally the diameter of the aperture 26 is smaller than the diameter of the joint ball 20.

In this way, it is possible to transmit relatively high loads along the longitudinal axis of the axial joint, also assisted by the greater specific pressure which the self-lubricating multi-layer material used for the first half shell 14 is capable of withstanding, and by the shape of the half-shell 14 itself, substantially hemispherical and without ripple marks of any kind which may lead locally to excessively high increases in the specific pressure between the surface in the first half-shell 14 and that of the joint ball 20, such as to create localised wear phenomena which reduce the operating life of the axial joint according to the invention.

With reference to figures 1 and 3, a shank 30 is shown, positioned on the casing 2 on the side opposite that from which the shank 22 of the ball pin 18 projects, which allows the ball joint to be connected easily to the other parts of a vehicle. To facilitate the operation of connecting the axial joint to other parts of the vehicle, the shank 30 may be threaded, for example.

To reduce friction and therefore wear between the joint ball 20 and the first half-shell 14, lubricant for example may be introduced between the joint ball 20 and the first half-shell 14 during assembly of the axial joint.

The method of joining the axial joint according to the invention corresponds substantially to the method of assembling the joint illustrated in figures 1 and 2.

To obtain the axial joint according to the invention, it is necessary to make provision for the following steps:
- insert the half-shell 16 of plastics material inside the socket 2;
- insert the ball pin 18 with the ball 20 greased inside the second half-shell 16;
- fit the first half-shell 14 of self-lubricating multi-layer material onto the ball pin 20,
- close up the substantially cylindrical walls 6 of the socket 2 by cold working so as to incorporate the shell 12 and the joint ball.

Naturally, the principle of the invention remaining the same, what has been described and illustrated may be varied widely without thereby departing from the scope of the invention.

## Claims

1. An axial joint comprising a metal socket (2) with an aperture (26) and an empty internal space (4), a ball pin (18) formed by a joint ball (20) and a shank (22), the joint ball (20) being enclosed for the greater part inside the socket (2) and the shank (22) projecting from the socket (2) through an aperture (26), in which after assembly of the axial joint, the diameter of the joint ball (20) is greater than the diameter of the aperture (26) of the socket, **characterized in that** a shell (12) composed of a first part or first half-shell (14) and by a second part or second half-shell (16) is fitted between the socket (2) and the joint ball (20).

2. An axial joint according to claim 1, **characterized in that** said first part (14) is of substantially hemispherical shape, produced from self-lubricating multi-layer material and shaped into its final form before being inserted inside the socket.

3. An axial joint according to claims 1 and 2, **characterized in that** the second part (16) is produced from plastics material.

4. An axial joint according to any one of the preceding claims, **characterized in that** the socket (2) comprises a shank (30).

5. An axial joint according to claim 4, **characterized in that** the shank (30) of the socket (2) is on the opposite side to the aperture (26).

6. A method for the production of an axial joint according to claims 1 to 5, **characterized in that** it comprises the following steps:
- inserting the second half-shell (16) of plastics material inside the socket (2),
- inserting the ball pin (18) with the joint ball (20) greased inside the second half-shell (16),
- fitting the first half-shell (14) of self-lubricating multi-layer material onto the ball pin (18),
- closing the substantially cylindrical walls (6) of the socket (2) by cold working so as to incorporate the shell (12) and the joint ball (20).
